# EUROPEAN PATENT SPECIFICATION

(11) **EP 0 477 171 B1**
(45) Date of publication and mention of the grant of the patent: **13.09.1995**
(21) Application number: 89908936.1
(22) Date of filing: 12.05.1989
(51) Int. Cl.: B05D 5/08, B05D 7/00, D04H 13/00, D04H 1/64

(54) **NON-STICK BONDER ROLL COATING**
NICHTKLEBENDE BESCHICHTUNG FÜR BINDEROLLEN
REVETEMENT NON ADHERENT POUR ROULEAUX DE LIAGE

(43) Date of publication of application: 01.04.1992
(73) Proprietor: E.I. DU PONT DE NEMOURS AND COMPANY, Wilmington Delaware 19898 (US)
(72) Inventor: HENRY, Carolyn MacLeod, Greenville, NC 27858 (US); VORHEES, Carl, E., L-8079 Bertrange (LU)
(74) Representative: Jones, Alan John
(86) International application number: US8901989
(87) International publication number: WO9013415

(56) References cited:
- EP-A- 0 056 280
- US-A- 2 562 118
- US-A- 3 169 899
- US-A- 3 532 589
- US-A- 4 554 207
- PATENT ABSTRACTS OF JAPAN, vol. 10, no. 134 (M-479)(2191), 17 May 1986; & JP-A-60 258 049

## Description

### BACKGROUND OF THE INVENTION

### 1. Field of the Invention:

This invention provides a non-stick coating on bonder rolls used in the manufacture of polyolefin film-fibril sheets. The coating comprises a primer layer formed from an aqueous suspension of polytetrafluoroethylene containing chromic acid and phosphoric acid and at least one topcoat layer of perfluorinated vinyl ether copolymers of tetrafluoroethylene and poly(propyl vinyl ether).

### 2. Description of the Prior Art:

Processes for the flash spinning of plexifilamentary strands are disclosed in Blades and White, U.S. Patent No. 3,081,519. Strands from several spinning positions may be deposited and overlapped on a moving belt to form a wide, unbonded sheet as disclosed in Steuber, U.S. Patent No. 3,169,899. These overlapped strand layers can be bonded by heat and pressure into coherent, abrasion-resistant film-fibril sheets which are useful for the making of disposable protective garments, packaging applications, filtration, etc.

One such process for finishing and bonding the unbonded sheet is described in U.S. Patent 3,532,589 to David. The David process comprises thermally bonding the film-fibril sheet by subjecting it in a heating zone to light compression between two surfaces. One surface is a hard, heat-conducting material which is maintained at a temperature substantially equal to or greater than the melting point range of the film-fibril elements The second surface is a flexible, poor heat conductor. The light compression prevents shrinkage of the film-fibril sheet.

In U.S. Patent 4,554,207, the film-fibril sheet is exposed to the hard heat conducting material for a period of time sufficient to reach a temperature within 7 degrees C of the melting range of the film-fibril elements, but not more than 20 degrees C above the upper limit of the range, and to allow the second face of the sheet to reach a temperature of 0.8 to 10 degrees C lower than the first face of the sheet. After the heat treatment, the sheet is passed, while under light compression, through a cooling zone where the temperature of the film-fibril sheet throughout its thickness is reduced to a temperature less than that at which the sheet will distort or shrink when restrained. Typically, the sheet will be cooled to at least 30 degrees C below the melting temperature of the film-fibrils.

The hard, heat-conducting material is normally the metal surface of a drum. The film-fibril sheet is usually comprises of polyethylene, which has a melting point range of 135 to 137 degrees C.

When the process is operated at high speed, the surface of the drum must be heated to about 140 - 154 degrees C. At these temperatures, the polyethylene film-fibrils tend to stick to the metal surface of the drum. Polyethylene particles generated during spinning and laydown may become detached from the strands, stick to the drum surface, and build up, affecting uniform heat transfer and creating a visible defect in the finished sheet.

Treatment of the drum surface with a coating composition comprising a silicone and an epoxy film with small amounts of fluorocarbon copolymer embedded therein is disclosed in U.S. Patent 4,369,279 to Emerick. This composition functions satisfactorily as a release agent for a short time, but soon fails. Globules of molten polyethylene build up on the roll causing the sheet to stick to, and wrap around, the roll surface, shutting down the finishing line. The roll must then be removed from the finishing line, the old release coating stripped away, and the roll must be recoated, resulting in lost production time. Typically, this coating had a useful lifetime on the commercial finishing line of only about one day.

### Summary of the Invention

There is provided by this invention a bonder roll for use in the manufacture of polyolefin film-fibril sheets having a composite coating comprising:
(a) at least one primer layer formed of an aqueous suspension of 10 to 98 weight% polytetrafluoroethylene, 1 to 45 weight% chromic acid and 1 to 45 weight% phosphoric acid based on the total weight of the polymer and acid, baked on the embosser roll at least 15 minutes at 200 to 370°C;
(b) at least one topcoat layer on the primer layer, said topcoat layer formed of a dry powder of perfluorinated vinyl ether copolymers of 99.5 to 92% tetrafluoroethylene and 0.5 to 8% poly(propyl vinyl ether) baked on the roll at least 15 minutes at 300 to 425°C.

Optionally, a first layer of ceramic can be applied to the roll prior to the primer and topcoat layers.

Also provided by this invention is a bonder roll for use in the manufacture of polyolefin film-fibril sheets wherein release strips are affixed to the outer edges of the roll before or after coating so that the edges of the polyolefin film-fibril sheet travel on the strips.

### Detailed Description of the Preferred Embodiments

The bonder rolls to be coated are of the type generally described in U.S. Patents 3,532,589 and 4,554,207. Which patents are herein incorporated by reference.

The roll to be coated can be heat treated at a metal temperature of about 385°C for at least 4 hours to loosen the old coating and to remove any oils or substances which might be present on the surface of the roll, or might be contained inside the roll, either of which could contaminate the final coated surface. The surface is then grit blasted to remove the old coating and provide a clean surface for the coating. The roll is grit blasted using vertical, horizontal and diagonal sweeping motions. The grit blasting material must be gentle enough to remove the coating without damaging the surface of the roll. The grit and particulates from the coating are removed using compressed air and the surface is then cleaned with a degreaser.

Different layers are applied to the roll to yield the non-stick coating of the present invention; (1) at least one primer layer and (2) at least one topcoat layer. Optionally, a ceramic layer is first applied to the roll.

The composition of the optional ceramic layer is conventional and can be formed of oxides such as aluminum oxide, titanium oxide, chromium oxide and the like and mixtures thereof. The ceramic layer is applied for additional corrosion resistance and is applied by conventional methods such as spraying to a final thickness of 30 to 35 micrometers. The coated roll is then heated to about 350°C and held for at least 30 minutes. The roll is allowed to cool to below 49°C before application of additional layers.

The primer layer is an aqueous suspension of 10 to 98 weight% polytetrafluoroethylene, 1 to 45 weight% of phosphoric acid, and 1 to 45 weight% chromic acid based on the combined weight of polymer and acid as disclosed in U.S. Patent No. 2,562,118. The teachings of U.S. 2,562,118 are herein incorporated by reference.

The separate liquids of the primer layer, the polymer of tetrafluoroethylene and the mixed acid constituent, are thoroughly mixed together at room temperature by rolling the containers and strained through 140 mesh openings. Shaking creates bubbles which are undesirable. During this rolling procedure the roll to be coated is heated at 29°C surface metal temperature and held for 10 minutes. A specific volume of primer can be applied to the roll to ensure proper coating thickness. Conventional compressed air spray equipment is used to spray the primer layer on the rolls at approximately 40 to 60 psig. The primer is preferably applied in two layers. A first layer is applied to a thickness of approximately 5 micrometers and the second to fill in any areas missed by the first layer. Key to the process is the lightness of the spray. The volume may be checked after the first layer to determine if the correct quantity is being applied to the roll. The volume must be checked after the second layer. The volume of primer should be that which indicates a final primer layer of dry film thickness of 5 to 10 micrometers. If any other volume remains, the primer should be cleaned off with water and the roll should be lightly grit blasted before re-application of the primer.

Correct primer application is essential to the application process. Traditional primer application will be very blotchy due to the minimal amount of material actually applied to the roll. The roll with the applied primer layer is placed in an oven at a temperature in the range from 200 to 370°C for a time sufficient to cure the layer. Preferably, at a metal temperature of 250°C for at least 15 minutes. The maximum heating rate for the roll is 30C° per hour and the roll metal temperature must not exceed 370°C for more than 15 minutes. Uniformity of bake is also important, with a maximum of 5C° difference from one end of the roll to the other. Thermocouples can be placed on the metal roll at the ends to ensure that the ends reach the required baking temperature. After baking, the roll is allowed to cool below 49°C before applying topcoat.

The topcoat layer comprises at least one layer on the primer layer. The topcoat layer is formed from a dry powder of perfluorinated vinyl ether copolymers of 99.5 to 92% tetrafluoroethylene and 0.5 to 8% poly(propyl vinyl ether) hereinafter referred to as PFA.

Uniform coating thickness is essential, since heat transfer from the roll to the sheet must be uniform. To improve coating uniformity, the PFA can be applied in sequential layers to build up thickness. The first layer may be applied at room temperature to achieve a final dry film thickness of 25 to 55 micrometers. The coated roll is placed in an oven and baked at a temperature in the range from 300 to 425 for a time sufficient to cure the topcoat. Preferably, at about 385 °C for at least 20 minutes. The maximum heating rate for the roll is 30°C per hour and the roll metal temperature must not exceed 425°C for more than 15 minutes. Subsequent topcoat layers can be applied to the hot drum for a total topcoat dry film thickness of 60 to 100 micrometers. Any additional topcoat layers are preferably baked at least 3 hours at 360°C. Thermocouples can be placed on the metal roll at the ends to ensure that the ends reach the required baking temperature.

Final inspection of the roll is made using an instrument such as a film thickness gauge to confirm correct coating application.

If desired, modifying agents, such as pigments, fillers and stabilizers may be added to the material forming the top layer provided they are compatible with and stable in the presence of the other ingredients.

Release strips can be applied near the outer edges of the bonder roll. The purpose of these release strips is to support and protect the edges of the film-fibril sheet. In operation, the edges of the film-fibril sheet ride on the surface of the release strips. The release strips reduce heat transfer from the surface of the drum to the normally thinner sheet edges, and reduce melting and sticking of the film fibril sheet edges.

Any material which is sufficiently thermally stable to the temperature conditions of the drum and can be treated to have acceptable release properties, can be used. Release strips of thicknesses in the range of 0.007 to 0.035 cm are suitable. An example of a suitable release strip material would be a Fiberglas tape impregnated with tetrafluoroethylene. Fiberglas is a Tradename of the Owens-Corning Fiberglas Corp. of Corning, N.Y. Typically, the release strips will be positioned on the drum so that the release strips extend from 1 to 4 cm past the edge of the running sheet. The release strips can be applied to the roll before or after coating.

### EXAMPLE

A bonder roll coated in accordance with this invention had a coating comprising:
a) ceramic layer of total thickness between 30 to 35 micrometers;
b) a primer layer of dry film thickness between 5 to 10 micrometers formed of an aqueous suspension of 42.4 weight% polytetrafluoroethylene, 4.25 weight% chromic acid, 3.6 weight% phosphoric acid and approximately 50 weight% water, baked on the roll at 250°C for 15 minutes;
c) a topcoat layer on the primer layer of total topcoat dry film thickness between 70 to 90 micrometers, said topcoat layer formed of a dry powder of perfluorinated vinyl ether copolymers of 99.5 to 92% tetrafluoroethylene and 0.5 to 8% poly(propyl vinyl ether) baked on the roll at least 15 minutes at 300 to 425°C.

A final combined dry film coating thickness of about 105 to 135 micrometers gives good release properties and a lifetime on commercial bonding and finishing lines of about 9 months has been demonstrated.

## Claims

1. A bonder roll or use in the manufacture of polyolefin film-fibril sheets, having a composite coating comprising:
(a) at least one primer layer formed of an aqueous suspension of 10 to 98 weight% polytetrafluoroethylene, 1 to 45 weight% chromic acid and 1 to 45 weight% phosphoric acid based on the total weight of the polymer and acid, baked on the roll at least 15 minutes at 200 to 370°C;
(b) at least one topcoat layer on the primer layer said topcoat layer formed of a dry powder of perfluorinated vinyl ether copolymers of 99.5 to 92% tetrafluoroethylene and 0.5 to 8% poly(propyl vinyl ether) baked on the roll at least 15 minutes at 300 to 425°C.

2. The bonder roll of claim 1 wherein the roll is first coated with a ceramic coating of total thickness between 30 to 35 micrometers.

3. The bonder roll of claim 1 wherein the total primer layer is of dry film thickness between 5 to 10 micrometers.

4. The bonder roll of claim 1 wherein the total topcoat layer is of dry film thickness between 70 to 90 micrometers.

5. A bonder roll for use in the manufacture of polyolefin film-fibril sheets according to any one of claims 1 to 4, wherein a release strip is affixed to the outer edges of the roll so that the edge of the polyolefin film-fibril sheet travels on the strip.

## Patentansprüche

1. Binderolle zur Verwendung bei der Herstellung von Bahnen aus Folienfibrillen aus Polyolefin, die eine Verbundbeschichtung aufweisen, umfassend:
(a) mindestens eine Primerschicht, bestehend aus einer wäßrigen Losung von 10 bis 98 Gew.-% Polytetrafluorethylen, 1 bis 45 Gew.-% Chromsäure und 1 bis 45 Gew.-% Phosphorsäure, basierend auf dem Gesamtgewicht des Polymers und der Säure, die mindestens 15 Minuten lang bei 200 bis 370 °C auf der Rolle gehärtet wird;
(b) mindestens eine Oberschicht auf der Primerschicht, wobei die Oberschicht aus einem trockenen Pulver aus Copolymeren von Perfluorvinylether aus 99,5 bis 92 % Tetrafluorethylen und 0,5 bis 8 % Poly(propylvinylether) besteht und mindestens 15 Minuten lang bei 300 bis 425 °C auf der Rolle gehärtet wird.

2. Binderolle nach Anspruch 1, worin die Rolle zuerst beschichtet wird mit einer Keramikbeschichtung, die eine Gesamtdicke zwischen 30 und 35 Mikrometern aufweist.

3. Binderolle nach Anspruch 1, worin die gesamte Primerschicht eine Trockenfoliendicke zwischen 5 und 10 Mikrometern aufweist.

4. Binderolle nach Anspruch 1, worin die gesamte Oberschicht eine Trockenfoliendicke zwischen 70 und 90 Mikrometern aufweist.

5. Binderolle zur Verwendung bei der Herstellung von Bahnen aus Folienfibrillen aus Polyolefin nach einem beliebigen der Ansprüche 1 bis 4, worin ein trennbarer Streifen so an den Außenrändern der Rolle befestigt ist, daß der Rand der Bahn aus Folienfibrillen aus Polyolefin auf dem Streifen läuft.

## Revendications

1. Un rouleau de liaison destiné à être utilisé dans la fabrication de feuilles de films de polyoléfine-fibrille comportant un revêtement composite constitué de:
(a) au moins une couche de base constituée d'une suspension aqueuse renfermant 10 à 98% en poids de polytétrafluoroéthylène, 1 à 45% en poids d'acide chromique et 1 à 45% en poids d'acide phosphorique exprimé par rapport au poids total du polymère et de l'acide, cuit sur le rouleau pendant au moins 15 minutes à une température de 200 à 370°C;
(b) au moins une couche superficielle appliquée sur la couche de base, ladite couche superficielle étant constituée d'une poudre sèche de copolymères d'éther vinvlique perfluoré de 99,5 à 92% de tétrafluoroéthylène et de 0,5 à 8% de poly(propyl vinyle éther), cuit sur le rouleau pendant au moins 15 minutes à une température de 300 à 425°C.

2. Le rouleau de liaison selon la revendication 1, dans lequel le rouleau est d'abord recouvert d'un revêtement de céramique d'une épaisseur totale comprise entre 30 et 35 micromètres.

3. Le rouleau de liaison selon la revendication 1, dans lequel la totalité de la couche de base présente une épaisseur de film sec comprise entre 5 et 10 micromètres.

4. Le rouleau de liaison selon la revendication 1, dans lequel la couche superficielle totale présente une épaisseur de film sec comprise entre 70 et 90 micromètres.

5. Un rouleau de liaison destiné à être utilisé pour la fabrication de feuilles de films de polyoléfine-fibrille selon l'une quelconque des revendications 1 à 4, dans lequel une bande antiadhésive est fixée sur les bords externes du rouleau de manière à ce que les bords du film de polyoléfine-fibrille se déplacent sur la bande.
